# FASCICULE DE BREVET EUROPEEN

(11) **EP 2 855 861 B1**
(45) Date de publication et mention de la délivrance du brevet: **13.07.2016**
(21) Numéro de dépôt: 13727820.6
(22) Date de dépôt: 23.05.2013
(51) Int. Cl.: F01D 13/02, F01D 15/10, F03G 6/06, F04D 25/02, F01K 3/12, F01K 7/22, F22B 1/00

(54) **COUPLAGE DE TURBOPOMPE POUR SELS FONDUS**
TURBOPUMPENKUPPLUNG FÜR GESCHMOLZENE SALZE
COUPLING OF A TURBOPUMP FOR MOLTEN SALTS

(30) Priorité: 25.05.2012 EP 12169483; 25.05.2012 BE 201200356
(43) Date de publication de la demande: 08.04.2015
(73) Titulaire: Cockerill Maintenance & Ingénierie S.A., 4100 Seraing (BE)
(72) Inventeur: DETHIER, Alfred, B-4140 Sprimont (BE)
(74) Mandataire: Pronovem
(86) Numéro de dépôt international: PCT/EP2013/060577
(87) Numéro de publication internationale: WO 2013/174901

(56) Documents cités:
- WO-A1-2011/121852
- WO-A2-2011/018814
- WO-A2-2011/077248
- GB-A- 2 449 181

## Description

### Objet de l'invention

La présente invention se rapporte au domaine des centrales solaires thermiques. En particulier, l'objet de la présente demande se rapporte aux installations de production d'énergie à concentration solaire CSP (pour *Concentrated Solar Power plant*), du type à récepteurs solaires en tour, utilisant comme fluide caloporteur des sels fondus et dans lesquelles sont utilisées des pompes verticales pour la circulation et le transfert des sels fondus portés à haute température.

### Etat de la technique

Dans les CSP du type à tour centrale, un grand nombre d'héliostats (sous forme de miroirs plans) reflètent la lumière solaire vers un ou plusieurs récepteurs solaires, situés au sommet de la tour, les héliostats étant disposés de manière telle que les ombres créées par les miroirs n'interfèrent pas avec les miroirs voisins.

Le récepteur solaire, chauffé par les rayons solaires incidents concentrés va générer un fluide chaud qui sera ensuite utilisé au niveau du sol pour produire de la vapeur à haute pression capable d'entraîner une turbine et de produire de l'électricité.

Le fluide chauffé au sommet de la tour peut être directement de la vapeur, ou de l'air, ou une huile thermique. Mais il peut aussi être un sel fondu consistant en un mélange de deux ou trois sels spécifiques, ou plus, utilisé comme fluide de transfert thermique.

Par exemple, un mélange de nitrate de sodium (NaNO₃) et de nitrate de potassium (KNO₃) est souvent utilisé, par exemple selon un rapport 60%/40%, formant un eutectique à pression atmosphérique ayant une température de fusion réduite à 220°C et offrant une bonne stabilité chimique et thermique entre la température de fusion et 600°C. En utilisant un mélange ternaire de sels, comprenant, outre les deux sels précités, du nitrate de lithium (LiNO₃), on peut même obtenir un eutectique ayant une température de fusion aussi basse que 120°C.

Un grand avantage de ce mélange de sels est sa possibilité de stockage en grande quantité à haute température sous pression atmosphérique, à un coût réduit. Le stockage permet le découplage entre la captation de l'énergie du soleil et la production d'électricité, indépendamment de l'ensoleillement et de l'heure solaire, en ce compris pendant la nuit.

Le principe de fonctionnement d'une centrale CSP à cycle combiné est connu et décrit par exemple dans le document WO 2011/077248.

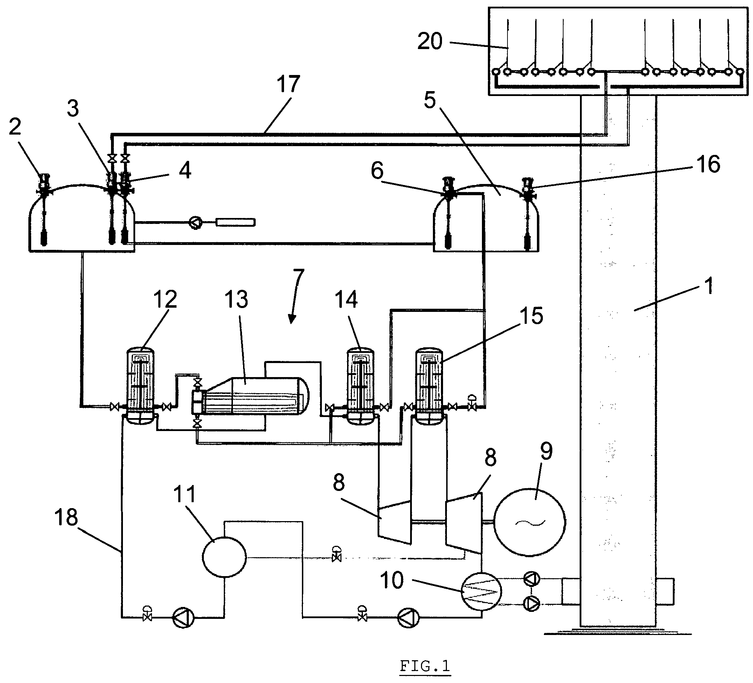

La figure 1 montre schématiquement le principe d'une centrale solaire à concentration du type tour 1. Le sel est maintenu liquide dans un premier réservoir de stockage froid isolé 2, à une température qui n'est pas inférieure à 260°C. Des pompes 3 sont nécessaires pour amener le sel fondu au sommet de la tour 1 et vu les grands débits requis ainsi que la haute densité du sel, la puissance absorbée par les pompes est assez élevée, d'une amplitude de 4 MW pour une centrale de grande puissance (typiquement 150 MW). Au sommet de la tour, le sel est chauffé à 550°C par la chaleur solaire concentrée comme précisé ci-dessus via un ou plusieurs échangeurs 20, répartis par exemple selon quatre cavités, constitués de tubes en acier à paroi mince. De là, le sel chauffé est renvoyé vers un second réservoir de stockage chaud isolé 5. La capacité de ce réservoir dépend de la durée d'alimentation requise pour la turbine produisant l'électricité. Lorsque la production d'électricité par la centrale est requise, le sel chaud est envoyé par une pompe 6 vers un système conventionnel de génération de vapeur 7 pour produire de la vapeur surchauffée pour un générateur d'électricité 9 à turbine 8. La figure 1 montre en outre un exemple détaillé, et non limitatif pour la présente invention, de générateur de vapeur 7 selon l'état de la technique.

Le circuit de sel fondu est référencé 17 et le circuit d'eau/vapeur est référencé 18 sur la figure 1.

Des performances typiques pour une installation de 150 MW sont données dans le tableau 1.

Il est également connu que l'on pourrait utiliser dans ce type d'installation des turbines de récupération de puissance hydraulique 4 (HRPT pour *Hydraulic Power Recovery Turbine*). Celles-ci peuvent être installées dans la ligne de retour du sel chauffé au réservoir de stockage, afin de récupérer l'énergie mécanique (gravifique) du sel descendant du sommet de la tour jusqu'au sol, la puissance récupérable ayant une amplitude typique de 3 MW pour la centrale précitée.

A côté d'un certain nombre d'avantages tels qu'une grande capacité de stockage de l'énergie sous pression atmosphérique, un faible coût du sel compatible avec le respect de l'environnement, une absence totale de risque au feu, une grande simplicité et des coûts réduits pour le récepteur solaire et des équipements associés en sommet de tour, les centrales CSP à tour présentent quelques désavantages dont la nécessité d'utiliser des pompes très spécifiques, la conception d'échangeurs sels fondus/eau-vapeur et la nécessité de surveiller les températures relativement élevées des sels fondus.

Le document WO 2011/018814 divulgue un procédé pour mettre sous pression localement un premier circuit dans lequel circule un premier fluide chauffé à une première pression et fournir ce premier fluide à un échangeur de chaleur pour échanger de la chaleur avec un second fluide circulant dans un deuxième circuit avec une seconde pression supérieure à la première pression. Un moyen de mise sous pression, tel qu'une pompe, est prévu dans le premier circuit pour augmenter la pression du premier fluide en amont de l'entrée dans l'échangeur jusqu'à une pression correspondant à celle du second fluide. Sur la ligne de retour du premier circuit est prévu un moyen réducteur de pression, tel qu'une vanne papillon, pour diminuer la pression du premier fluide en aval de la sortie de l'échangeur. En aval de la vanne papillon est inséré un moteur hydraulique comprenant une turbine ou une pompe centrifuge utilisée comme une turbine. Le moteur hydraulique et la pompe de mise sous pression sont reliés à un même moteur électrique à vitesse variable en fonction sur le même arbre. Ainsi, le moteur hydraulique actionné par le flux de fluide sous pression en retour à partir de l'échangeur de chaleur non seulement abaisse la pression du fluide lui-même mais en outre fournit l'alimentation pour faire fonctionner la pompe de mise sous pression, ce qui réduit par conséquent l'apport d'énergie électrique externe.

### Buts de l'invention

La présente invention vise à s'affranchir des inconvénients de l'état de la technique.

En particulier, l'invention a pour but de réduire l'absorption de puissance des pompes d'acheminement du fluide caloporteur au sommet de la tour centrale ou de compenser celle-ci par une récupération de puissance à un autre endroit.

### Principaux éléments caractéristiques de l'invention

Un premier objet de la présente invention se rapporte à un dispositif comprenant au moins une pompe verticale et au moins une turbine associée, pour le transport, sur une différence de niveau, d'un fluide caloporteur porté à haute température, la pompe assurant un mouvement ascendant dudit fluide dans une première section d'un conduit à partir d'un premier réservoir dit froid et la turbine étant actionnée par ledit fluide lors du mouvement de retour descendant dudit fluide dans une seconde section du conduit vers un second réservoir dit chaud, caractérisé en ce que le dispositif comprend en outre un dispositif mécanique de couplage de la turbine avec la pompe, ledit dispositif mécanique de couplage comprenant une boîte à engrenages avec un accouplement à cardans situé côté turbine, permettant à l'énergie mécanique produite par la turbine d'être réutilisée pour l'actionnement de la pompe.

Selon des modes d'exécution préférés de l'invention, le dispositif comprend en outre une ou une combinaison adéquate des caractéristiques suivantes :
- la turbine est du même type que la pompe mais utilisée en sens inverse ;
- la pompe ou la turbine est du type à axe vertical, mono- ou multi-étagée (multi)cellulaire avec roues à aubes radiales fermées ou semi-ouvertes ;
- la pompe ou la turbine est située au-dessus du réservoir ou est à corps immergé ;
- la pompe et la turbine sont conçues pour fonctionner avec un mélange de sels fondus sélectionnés parmi le groupe constitué par le nitrate de sodium, le nitrate de potassium et le nitrate de lithium ;
- la pompe et la turbine sont conçues pour fonctionner avec un mélange de sels fondus dont les pressions peuvent aller jusqu'à 60 bar ;
- la pompe et la turbine sont conçues pour fonctionner avec un mélange de sels fondus dont la température est comprise entre 100 et 600°C.

Un second objet de la présente invention se rapporte à une installation de production d'énergie à concentration solaire comprenant :
- une pluralité d'héliostats disposés au sol autour d'une tour centrale de concentration, ladite tour comprenant en son sommet au moins un échangeur thermo-solaire ;
- un premier circuit de transport de sels fondus à partir d'un premier réservoir de stockage dit froid vers ledit échangeur et retour vers un second réservoir de stockage dit chaud pour les sels fondus portés à haute température, ledit échangeur se trouvant au somment de la tour, c'est-à-dire à une hauteur supérieure à celle des réservoirs ;
- un second circuit de génération de vapeur par échange thermique avec le premier circuit en sels fondus et de production d'électricité via un système turbine/générateur ;
caractérisée en ce que l'installation comprend en outre le dispositif comprenant au moins une pompe verticale et au moins une turbine associée comme décrit ci-dessus.

Avantageusement, la différence de niveau entre les réservoirs de stockage en sels fondus et les échangeurs au sommet de la tour est d'au moins 150 m.

### Brève description des figures

Des exemples de réalisation suivant l'état de la technique et l'invention sont décrits par la suite avec plus de détails à l'aide des figures annexées.

La figure 1, déjà mentionnée, montre schématiquement une centrale à concentration solaire CSP du type à tour centrale, avec circulation de sel fondu et couplage à un système conventionnel de production d'électricité.

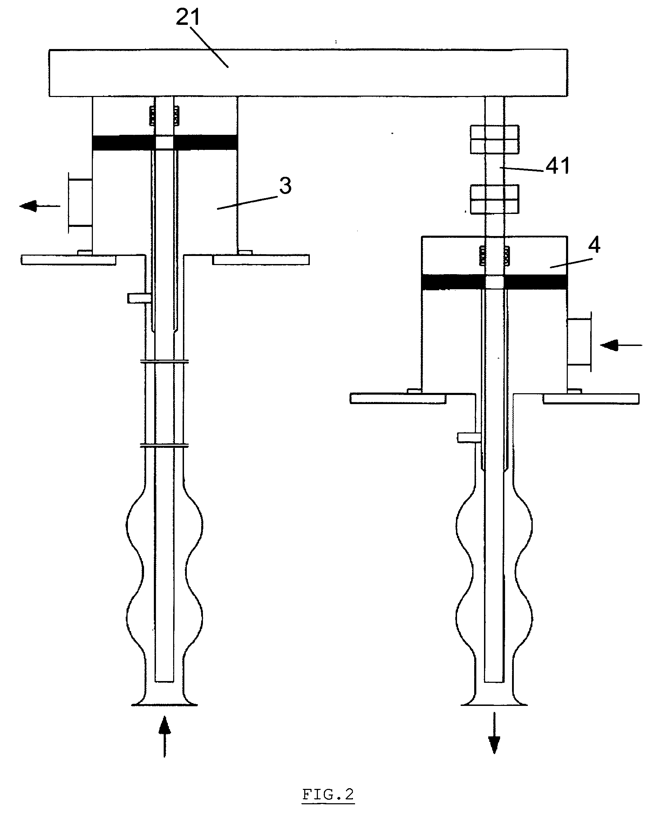

La figure 2 montre une vue schématique du système de couplage mécanique, selon l'invention, entre la pompe d'acheminement du fluide caloporteur vers la tour centrale et la turbine de récupération de puissance au retour du fluide caloporteur vers le réservoir de stockage.

### Description de formes d'exécution préférées de l'invention

Selon une forme d'exécution préférée de la présente invention, les pompes 3 et les turbines de récupération de puissance 4 sont mécaniquement couplées ensemble afin de récupérer de l'énergie avec le meilleur rendement possible.

Le type de pompe nécessaire pour l'application en sel fondu selon l'invention est spécifique. On trouvera par exemple les caractéristiques suivantes pour de telles pompes :
- axe vertical ;
- construction mono- ou multi-étagée (multi)cellulaire avec roues fermées (ou semi-ouvertes) ;
- installation au-dessus du réservoir de sel, de préférence à corps immergé, afin de simplifier le drainage ;
- construction avec arbre en porte-à-faux possible si la profondeur d'immersion de la pompe, c'est-à-dire la distance entre la taque d'assise et la tubulure d'aspiration est suffisamment faible ; à défaut, nécessité de paliers intermédiaires sur la ligne d'arbre ;

- étanchéité d'arbre avec la plaque d'assise réalisée par un labyrinthe, avec retour par gravité des fuites vers le réservoir ;
- moteur électrique à fréquence variable ;
- utilisation de matériaux et d'une construction adéquats pour supporter les hautes températures des sels fondus, etc. Les matériaux utilisés seront par exemple résistants à la corrosion et à l'abrasion.

De telles pompes ont déjà été utilisées dans le domaine solaire à collecteurs paraboliques au sol mais avec des pressions de fluide relativement faibles.

La pompe doit être dimensionnée en tenant compte des trois paramètres suivants : sa longueur (environ 15 m par exemple), sa vitesse variable et la forte puissance requise.

Avantageusement, selon l'invention, les turbines de récupération de puissance seront de la même conception, avec éventuellement des roues à aubes spécifiques. Il suffit en principe de faire fonctionner les pompes centrifuges en sens inverse pour se trouver en mode turbine. Le couplage mécanique pompe-turbine est assuré par une boîte à engrenages 21, avec accouplement à cardan 41 côté turbine afin de permettre les dilatations différentielles entre la pompe 3 et la turbine 4.

Dans l'état de l'art, on connaît uniquement des systèmes de couplage en ligne entre pompe horizontale et turbine, avec embrayage.

Bien sûr, les turbines 4 ne peuvent pas récupérer la totalité de la puissance consommée par les pompes, vu les rendements des pompes et des turbines, jouant en sens opposé.

Toujours selon l'invention, la compensation de la différence de puissance sera assurée par des pompes électriques de même type (non représentées), d'ailleurs nécessaires pour vaincre les pertes de charge et aussi pour démarrer le système.

### Liste des repères

- 1: Tour à concentration solaire
- 2: Réservoir de sel froid
- 3: Pompe d'alimentation vers la tour
- 4: Turbine de récupération
- 5: Réservoir de sel chaud
- 6: Pompe de circulation vers le générateur de vapeur
- 7: Générateur de vapeur
- 8: Turbine(s)
- 9: Générateur d'électricité
- 10: Condenseur
- 11: Désaérateur
- 12: Economiseur
- 13: Chaudière bouilloire
- 14: Surchauffeur
- 15: Resurchauffeur
- 16: Pompe de mélange
- 17: Circuit de sel fondu
- 18: Circuit eau/vapeur
- 20: Récepteurs solaires et échangeurs
- 21: Boîte à engrenages
- 41: Arbre à cardans

**Tableau 1**

| | | **TOUR** | | **CYCLE DE TURBINE** | |
|---|---|---|---|---|---|
| | | | | | **Nominal** |
| **Durée** | heures | 6 | | 24 | 17,9 |
| **Stockage** | MWh therm | 2553 | MWh élec | 894 | 894 |
| **Puissance absorbée** | MW | 425 | **Turbine** | 37,3 | 50 |
| **Débit de sel** | kg/s | 970 | **Vers les échangeurs** | 242 | 325 |
| **Temp. du réservoir froid** | °C | 260 | **Condenseur T** | °C | 45,8 |
| **Temp. du réservoir chaud** | °C | 550 | **Condenseur P** | bar | 0,10 |
| **Poids de sel** | tonnes | 20952 | **Déaérateur T** | °C | 105 |
| **Volume** | m³ | 12040 | | | |
| **Diamètre** | m | 31 | | | |
| **Hauteur** | m | 16 | | | |
| **Débit de vapeur** | kg/s | | | 30,8 | 41,2 |
| **Pression de vapeur** | bar | | | 120 | 120 |
| **Temp. de vapeur** | °C | | | 530 | 530 |
| **Pression de réchauffage** | bar | | | 20 | 20 |
| **Temp. de réchauffage** | °C | | | 530 | 530 |

## Revendications

1. Dispositif comprenant au moins une pompe verticale (3) et au moins une turbine associée (4), pour le transport, sur une différence de niveau, d'un fluide caloporteur porté à haute température, la pompe (3) assurant un mouvement ascendant dudit fluide dans une première section d'un conduit (17) à partir d'un premier réservoir dit froid (2) et la turbine (4) étant actionnée par ledit fluide lors du mouvement de retour descendant dudit fluide dans une seconde section du conduit (17) vers un second réservoir dit chaud (5), **caractérisé en ce que** le dispositif comprend en outre un dispositif mécanique de couplage de la turbine (4) avec la pompe (3), ledit dispositif mécanique de couplage comprenant une boîte à engrenages (21) avec un accouplement à cardans (41) situé côté turbine (4), permettant à l'énergie mécanique produite par la turbine (4) d'être réutilisée pour l'actionnement de la pompe (3).

2. Dispositif selon la revendication 1, **caractérisée en ce que** la turbine (4) est du même type que la pompe (3) mais utilisée en sens inverse.

3. Dispositif selon la revendication 2, **caractérisée en ce que** la pompe (3) ou la turbine (4) est du type à axe vertical, mono- ou multi-étagée (multi)cellulaire avec roues à aubes radiales fermées ou semi-ouvertes.

4. Dispositif selon la revendication 3, **caractérisée en ce que** la pompe (3) ou la turbine (4) est située au-dessus du réservoir ou est à corps immergé.

5. Dispositif selon la revendication 1, **caractérisée en ce que** la pompe (3) et la turbine (4) sont conçues pour fonctionner avec un mélange de sels fondus sélectionnés parmi le groupe constitué du nitrate de sodium, du nitrate de potassium et du nitrate de lithium.

6. Dispositif selon la revendication 1, **caractérisée en ce que** la pompe (3) et la turbine (4) sont conçues pour fonctionner avec un mélange de sels fondus dont les pressions peuvent aller jusqu'à 60 bar.

7. Dispositif selon la revendication 1, **caractérisée en ce que** la pompe (3) et la turbine (4) sont conçues pour fonctionner avec un mélange de sels fondus dont la température est comprise entre 100 et 600°C.

8. Installation de production d'énergie à concentration solaire comprenant :
- une pluralité d'héliostats disposés au sol autour d'une tour centrale (1) de concentration, ladite tour comprenant en son sommet au moins un échangeur thermo-solaire (20) ;
- un premier circuit (17) de transport de sels fondus à partir d'un premier réservoir de stockage dit froid (2) vers ledit échangeur (20) et retour vers un second réservoir de stockage dit chaud (5) pour les sels fondus portés à haute température, ledit échangeur (20) se trouvant au sommet de la tour (1), c'est-à-dire à une hauteur supérieure à celle des réservoirs (2, 5) ;
- un second circuit (18) de génération de vapeur par échange thermique avec le premier circuit (17) en sels fondus et de production d'électricité via un système turbine/générateur (7, 8, 9) ;
**caractérisée en ce que** l'installation comprend en outre le dispositif comprenant au moins une pompe verticale (3) et au moins une turbine associée (4) selon l'une quelconque des revendications précédentes.

## Patentansprüche

1. Vorrichtung, umfassend mindestens eine vertikale Pumpe (3) und mindestens eine zugeordnete Turbine (4) für den Transport, über einen Niveauunterschied, eines auf hohe Temperatur gebrachten Kühlfluids, wobei die Pumpe (3) eine aufsteigende Bewegung des Fluids in einem ersten Abschnitt einer Leitung (17) ab einem kalten ersten Reservoir (2) sichert und die Turbine (4) von dem Fluid bei der absteigenden Rückwärtsbewegung des Fluids in einem zweiten Abschnitt der Leitung (17) zum warmen zweiten Reservoir (5) betätigt wird, **dadurch gekennzeichnet, dass** die Vorrichtung ferner eine mechanische Kopplungsvorrichtung der Turbine (4) mit der Pumpe (3) umfasst, wobei die mechanische Kopplungsvorrichtung ein Getriebe (21) mit einer turbinenseitig (4) gelegenen Kardankupplung (41) umfasst, so dass die von der Turbine (4) erzeugte mechanische Energie für die Betätigung der Pumpe (3) weiterverwendbar ist.

2. Vorrichtung nach Anspruch 1, **dadurch gekennzeichnet, dass** die Turbine (4) vom selben Typ wie die Pumpe (3) ist, aber in umgekehrter Richtung verwendet wird.

3. Vorrichtung nach Anspruch 2, **dadurch gekennzeichnet, dass** die Pumpe (3) oder die Turbine (4) vom Typ mit vertikaler Achse, mono- oder multistufig (multi)zellular mit geschlossenen oder halb geöffnet Schaufelrädern ist.

4. Vorrichtung nach Anspruch 3, **dadurch gekennzeichnet, dass** sich die Pumpe (3) oder die Turbine (4) über dem Reservoir befindet oder einen eingetauchten Körper hat.

5. Vorrichtung nach Anspruch 1, **dadurch gekennzeichnet, dass** die Pumpe (3) und die Turbine (4) konstruiert sind, um mit einem Gemisch geschmolzener Salze zu arbeiten, die aus der Gruppe ausgewählt sind, die vom Natriumnitrat, vom Kaliumnitrat und vom Lithiumnitrat gebildet ist.

6. Vorrichtung nach Anspruch 1, **dadurch gekennzeichnet, dass** die Pumpe (3) und die Turbine (4) konstruiert sind, um mit einem Gemisch geschmolzener Salze zu arbeiten, deren Drücke bis 60 bar betragen können.

7. Vorrichtung nach Anspruch 1, **dadurch gekennzeichnet, dass** die Pumpe (3) und die Turbine (4) konstruiert sind, um mit einem Gemisch geschmolzener Salze zu arbeiten, deren Temperatur zwischen 100 und 600 °C inklusive beträgt.

8. Anlage für die Produktion von Energie mit Solarkonzentration, umfassend:
- eine Vielzahl von auf dem Boden um einen zentralen Konzentrationsturm (1) angeordneten Heliostaten, wobei der Turm an seiner Spitze mindestens einen Thermo-Solar-Tauscher (20) umfasst,
- einen ersten Transportkreis (17) geschmolzener Salze ab einem kalten ersten Lagerreservoir (2) zum Tauscher (20) und zurück zu einem warmen zweiten Lagerreservoir (5) für die auf hohe Temperatur gebrachten geschmolzenen Salze, wobei sich der Tauscher (20) an der Spitze des Turms (1), das heißt, in einer höheren Höhe als die der Reservoire (2, 5), befindet,
- einen zweiten Dampferzeuger- (18) durch thermischen Austausch mit dem ersten Kreis (17) geschmolzener Salze und Stromerzeugungskreis über ein Turbine-Generator-System (7, 8, 9),
**dadurch gekennzeichnet, dass** die Anlage ferner die Vorrichtung umfasst, die mindestens eine vertikale Pumpe (3) und mindestens eine zugeordnete Turbine (4) nach einem der vorangehenden Ansprüche umfasst.

## Claims

1. A device comprising at least one vertical pump (3) and at least one associated turbine (4) for transporting, over a level difference, a heat-transfer fluid brought to a high temperature, the pump (3) ensuring an upward movement of said fluid in a first section of a pipe (17) from a first so-called cold reservoir (2) and the turbine (4) being actuated by said fluid during the downward return movement of said fluid in a second section of the pipe (17) toward a second so-called hot reservoir (5), wherein the device further comprises a mechanical device for coupling the turbine (4) with the pump (3), said mechanical coupling device comprising a gearbox (21) with a gimbal coupling (41) located on the turbine (4) side, allowing the mechanical energy produced by the turbine (4) to be reused to actuate the pump (3).

2. The device according to Claim 1, wherein the turbine (4) is of the same type as the pump (3), but is used in the opposite direction.

3. The device according to Claim 2, wherein the pump (3) or the turbine (4) is of the type with a vertical axis, and is mono- or multi-staged, (multi)cellular and has wheels with closed or semi-open radial vanes.

4. The device according to Claim 3, wherein the pump (3) or the turbine (4) is situated above the reservoir or has an immersed body.

5. The device according to Claim 1, wherein the pump (3) and the turbine (4) are designed to operate with a mixture of molten salts selected from the group consisting of sodium nitrate, potassium nitrate and lithium nitrate.

6. The device according to Claim 1, wherein the pump (3) and the turbine (4) are designed to operate with a mixture of molten salts, the pressures of which may reach up to 60 bar.

7. The device according to Claim 1, wherein the pump (3) and the turbine (4) are designed to operate with a mixture of molten salts whereof the temperature is comprised between 100 and 600°C.

8. A concentrated solar power plant comprising:
- a plurality of heliostats positioned on the ground around a central concentration tower (1), said tower comprising at its apex at least one thermo-solar exchanger (20);
- a first circuit (17) for transporting molten salts from a first so-called cold storage reservoir (2) to said exchanger (20) and returning the molten salts brought to high temperature to a second so-called hot storage reservoir (5), said exchanger (20) being located at the apex of the tower (1), i.e. at a height that is greater than that of the reservoirs (2, 5);
- a second circuit (18) for generating steam by means of heat exchange with the first circuit (17) of molten salts and producing electricity by means of a turbine/generator system (7, 8, 9);
wherein the power plant further comprises the device comprising at least one vertical pump (3) and at least one associated turbine (4) according to any one of the preceding claims.
